# EUROPEAN PATENT SPECIFICATION

(11) **EP 0 864 732 B1**
(45) Date of publication and mention of the grant of the patent: **26.02.2003**
(21) Application number: 98103892.0
(22) Date of filing: 05.03.1998
(51) Int. Cl.: F01N 3/20, B01D 53/94

(54) **Process for selective reduction of NOx in exhaust gas**
Verfahren zur selektiven Reduktion von NOx in Abgas
Procédé de réduction sélective de NOx dans les gaz d'échappement

(30) Priority: 13.03.1997 US 40551 P
(43) Date of publication of application: 16.09.1998
(73) Proprietor: Haldor Topsoe A/S, 2800 Lyngby (DK)
(72) Inventor: Schoubye, Peter, DK-2970 Hoersholm (DK)
(74) Representative: Patentanwälte Zellentin & Partner

(56) References cited:
- EP-A- 0 381 236
- EP-A- 0 405 310
- EP-A- 0 555 746
- DE-A- 4 313 393
- DE-C- 3 709 649
- GB-A- 2 057 282
- US-A- 5 209 062
- US-A- 5 320 428
- PATENT ABSTRACTS OF JAPAN vol. 015, no. 031 (C-0798), 24 January 1991 & JP 02 268811 A (HITACHI ZOSEN CORP), 2 November 1990,

## Description

The invention relates to selective reduction of NOx, typically contained in exhaust gas from diesel engines by NH₃ that is generated by decomposition of compound such as urea, solutions of urea in water or solutions of NH₃ in water, which in the gas phase upstream of the so-called SCR catalyst is used for the selective reduction of NOx by NH₃.

The compound used as reductant is injected in liquid form as a spray, generated in a spray nozzle, into the exhaust gas stream having a temperature of typically 300-400°C that is required for the catalytic NOx reduction process. Droplets in the spray must, however, be evaporated and urea decomposed into NH₃, CO₂ and H₂O before the NH₃ can be utilized in the SCR catalyst for the NOx-reduction process. Evaporation and decomposition of droplets are strongly endothermal. The rate of evaporation and decomposition (gasification) of droplets is limited by the rate at which heat is transferred from the hot gas to the surface of the droplets through the gas film surrounding the droplets. This means that the time t for gasifying a droplet (the residence time) can be estimated by the equation:${\text{t = K∗d}}^{\text{-2}} \text{∗(T-Tmin.) seconds}$ where **d** is the (initial) diameter of the droplet and T the temperature of the gas, Tmin. the minimum temperature required for decomposition of the urea at an appropriate rate (i.e. about 180°C), while **K** is a constant that is nearly independent on the gas velocity.

Thus, the residence time of the droplets increases strongly with the size of the droplets.

EP 555,746 describes an evaporator for an urea solution being sprayed into a gas duct. The evaporator is constructed from thin corrugated metal foils forming thin, non-straight channels in parallel to the gas duct walls, and providing cross connections between the channels (holes in foil) to obtain an even distribution of both solution and gas and thereby quicker absorption of heat in contact with the channel walls. The channels are preferably 0.5-2 mm and the bendings on the corrugated metal foil located every 5-10 mm. Being a mere evaporator, the device described in EP 555,746 does not ensure the reduction of size of droplets sufficient for avoiding droplets to pass through the SCR catalyst unreacted.

The distance between the injection nozzle and the SCR catalyst required for achieving complete gasification of the droplets in the gas stream, furthermore, increases proportional to the gas velocity in the duct.

It is estimated from experiments and calculations that a residence time of 100 µm droplets of 35% solution of urea in exhaust gas at 300°C is in the order of 1 second which means that a distance of 20 m from the nozzle to the SCR catalyst is required for complete gasification of the droplets at 20 m/s gas velocity in the duct. If only 0.5 m distance from injection nozzle to the SCR catalyst is available (as in the case of diesel vehicles), the size of the droplets must, therefore, be decreased to less than 8 µm, which is very difficult, in order to achieve complete gasification of the droplets in the gas phase upstream of the SCR catalyst.

Most of the particles or droplets in the gas will pass unreacted through the SCR catalyst when the catalyst is monolithic with straight channels throughout the catalytic block.

It has now been found that relatively large droplets of a reductant generated by a simple spray nozzle can be fast and completely gasified if the droplets are caused to impinge on surfaces of a body that can easily be installed at the limited distance available between the nozzle and the SCR catalyst in e.g. a diesel vehicle.

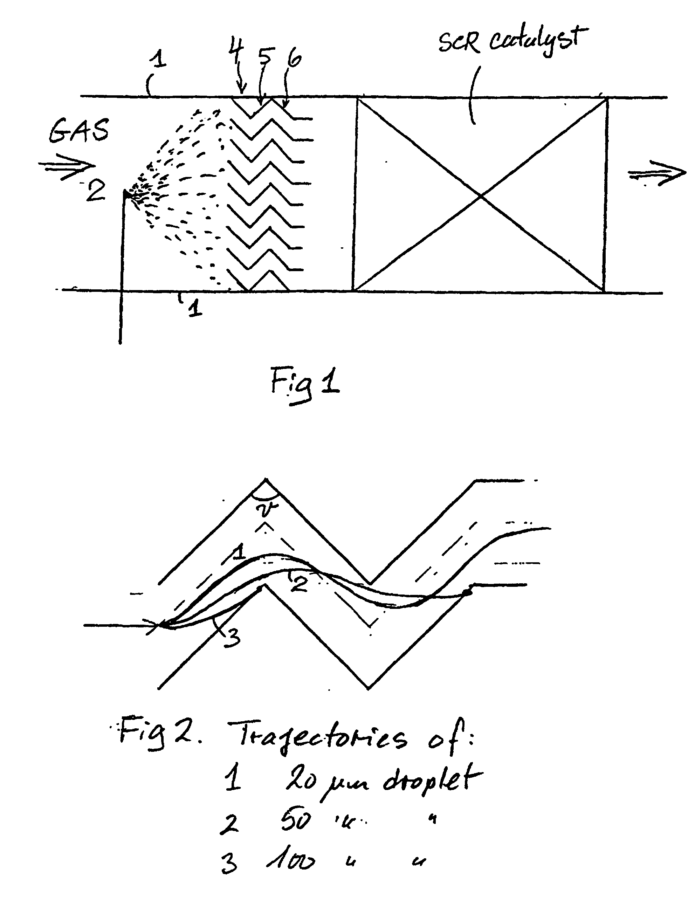

The body is shown in principles in Fig 1. It consists of a number of consecutive stacks each stack consisting of parallel plates that cause the gas to flow in a zig-zag pattern in the spaces between the plates from stack to stack whereby the droplets tend to impinge on the surface of the plates each time that the direction of flow is changed. When the droplets impinge, they splatter out on the surface on the surface whereby the liquid is heated up at a much higher rate than in the form of droplets in the gas phase because the plates are heated much more efficiently by the gas for several reasons. Hence, the plates enlarge the surface of heat transmission between liquid and gas, and the gas film restriction for heat transfer between the stagnant plates and the gas is much higher than that of droplets moving passively along with the gas flow.

The tendency for droplets to impinge on the plates of a stack increases with increasing size of the droplets, with increasing gas velocity in the space between the plates, with increasing angle of deflection of the gas stream when passing from stack to stack with the length of the plates in the direction of flow and with decreasing distance between the plates in a stack. This is shown in Fig. 2 showing calculated trajectories of 20, 50 and 100 µm droplets in a gas passing through 3 stacks of plates arranged with a distance of 10 mm between the plates and 90° angle of deflection of the gas passing from stack to stack and a gas velocity of 8 m/s in the spaces between the stacks. It is seen that the 100 µm droplet impinge already in the first stack, 50 µm droplet have impinged after the third stack, while the 20 µm droplet passes through all three stacks.

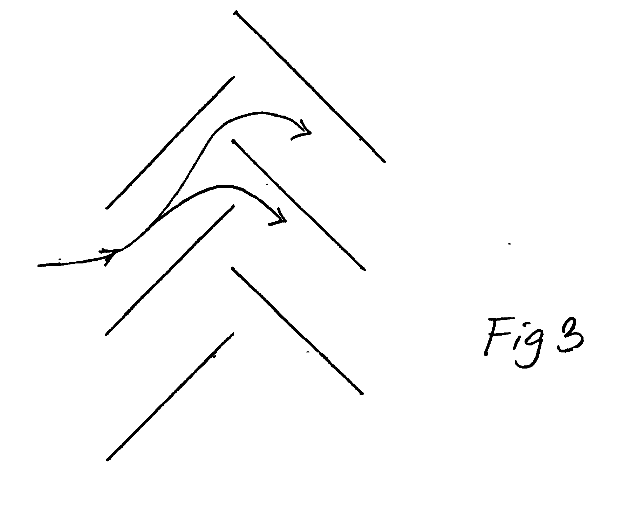

The efficiency of impingement will increase when the position of the plates in one stack are displaced from the position of the plates in the next stack so that the spaces between the plates are cut in half, when the gas passes to the next stack as shown in Fig. 3.

The rate of gasification and, in particular, the minimum temperature of the gas required for obtaining complete gasification of the reductant can be increased and decreased, respectively, coating the surfaces of the plates, or at least the areas of impingement of the plates, by materials such as oxides of Al, Fe, Ti, Zr, Si, Zn and/or Mg, which catalyze the decomposition of urea.

Impingement and mixing of the gas can be combined by staggering the plates in principles in the same way as used in known types of stationary mixers. The impingement effect will, however, be decreased when combined with mixing of the gas because of the bypass of gas between the channels in stationary mixers, which at a given mixing effect decreases the deflection of the gas.

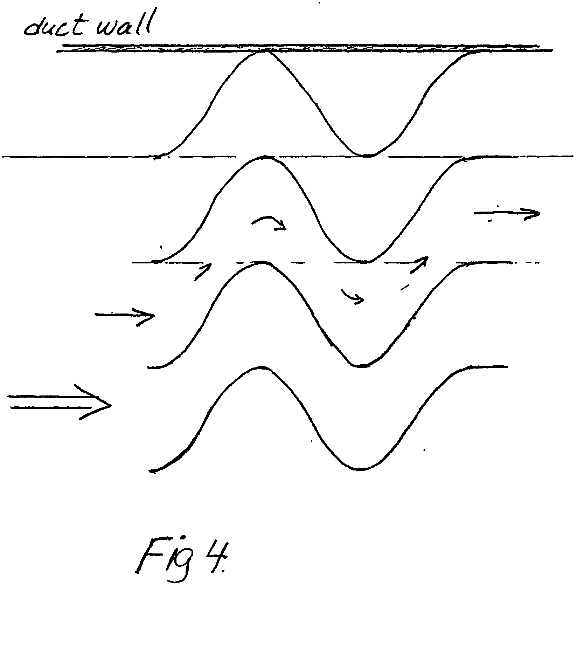

Instead of sharp edged channels formed by stacks of flat plates as shown in Fig. 1, the channels for gas flow can, alternatively, be formed as shown in Fig. 4 by piling wave-shaped plates with the waves perpendicular to the walls of the duct. The gas flow in the channels formed by the spaces between the wave-shaped plates will substantially be deflected in the same way as in sharp-edged channels formed by spaces between the above described array of flat plates shown in Fig 1.

## Claims

1. Process for Selective Catalytic Reduction of NOx in exhaust gases at temperatures of 200-600°C comprising the steps of
(a) injecting a spray of droplets containing a reductant and/or a precursor thereof being able to reduce Nox into a gas duct through an atomizing nozzle (2)
(b) passing the exhaust gas loaded with droplets through a device with flow channels formed by stacks of thin, metal plates (4,5,6) in parallel whereby the gas is forced to pass through the stacks in a zig-zag flow pattern,
(c) passing the gas through a layer of monolithic catalyst for selective reduction of NOx by the reductant and/or precursor thereof with channels parallel to the walls of the duct (1),
**characterised in that** the droplet diameter is larger than 20 µm, the number of stacks composed of parallel plates is 3-10, the gas velocity in the spaces between the plates is 2-30 m/s, the distance between the plates is 3-50 mm, the length of each of the plates is 1-5 times the distance between the plates, and the angle between the plates of two neighbouring stacks is 50-140°.

2. Process of claim 1, wherein substantially all the droplets impinge on the walls of the plates in the stacks, the diameter of the droplets are larger than a critical diameter at which the droplets are caused to impinge on said walls whenever the direction of gas flow is deflected through passage in the stacks.

3. Process as claimed in claim 1, wherein the plates are metallic, preferably of an acid resistant stainless steel alloy.

4. Process as claimed in claim 1, wherein the plates consist of ceramic material, preferably cordierite.

5. Process as claimed in claim 1, wherein the plates are coated, at least on the surfaces exposed to the impinging droplets by a 0.01-1 mm layer of at least one of the oxides of Al, Fe, Ti, Zr, Si, Zn or Mg.

6. Process as claimed in claim 1, wherein the reductant is a liquid mixture of urea and water with 30-100 weight% urea.

## Patentansprüche

1. Verfahren zur selektiven katalytischen Reduktion von NOx in Abgasen bei Temperaturen von 200 - 600°C, enthaltend die Schritte
a) Sprühinjektion von Reduktionsmittel und/oder eine Vorstufe davon enthaltenden Tröpfchen, welche in der Lage sind NOx zu reduzieren, mit Hilfe einer Sprühdüse (2) in eine Gasführung
b) Hindurchleiten, des mit Tröpfchen beladenen Gases durch eine Fliesskanäle aufweisende Vorrichtung, welche durch Stapel aus dünnen parallelen Metallplatten (4, 5, 6) gebildet sind, wobei das Gas durch die Stapel in Zickzackfließmustem hindurchgeführt wird
c) Hindurchleiten des Gases durch eine monolithische Katalysatorschicht zur selektiven Reduktion von NOx durch das Reduziermittel oder dessen Vorstufe, welcher zu den Wandungen der Führung (1) parallele Kanäle aufweist,
**dadurch gekennzeichnet, dass** der Tröpfchendurchmesser größer als 20 µm ist, die Anzahl der aus parallelen Platten zusammengesetzten Stapel 3 - 10 ist, die Gasgeschwindigkeit in den Freiräumen zwischen den Platten 2 - 30 m/sec. beträgt, der Abstand zwischen den Platten 3 - 50 mm, die Länge jeder Platte 1 - 5 mal so groß, wie der Abstand zwischen den Platten und der Winkel zwischen den Platten zweier benachbarter Stapel 50 - 140°C ist.

2. Verfahren nach Anspruch 1 **dadurch gekennzeichnet, dass** im wesentlichen alle Tröpfchen auf die Wandungen der Platten in den Stapeln auftreffen, wobei die Durchmesser der Tröpfchen größer sind als ein kritischer Durchmesser, bei welchen die Tröpfchen gezwungen sind auf die Wandungen aufzutreffen, wann immer die Richtung des Gasstroms durch Einleiten in die Stapel geändert wird.

3. Verfahren nach Anspruch 1 **dadurch gekennzeichnet, dass** die Platten metallisch sind und vorzugsweise aus einer säurenresistenten Stahllegierung bestehen.

4. Verfahren nach Anspruch 1 **dadurch gekennzeichnet, dass** die Platten aus keramischem Material bestehen, bevorzugt aus Cordierit.

5. Verfahren nach Anspruch 1, **dadurch gekennzeichnet, dass** die Platten wenigstens an der Oberfläche, die den auftreffenden Tröpfchen ausgesetzt ist, mit einem Belag wenigstens eines der Oxide von Al, Fe, Ti, Zr, Si, Zn oder Mg beschichtet sind.

6. Verfahren nach Anspruch 1 **dadurch gekennzeichnet, dass** das Reduktionsmittel eine flüssige Mischung aus Harnstoff und Wasser ist mit 30 - 100 Gew. % Harnstoff.

## Revendications

1. Procédé de réduction catalytique sélective de NOx dans les gaz d'échappement à des températures de 200°C à 600°C, comprenant les étapes consistant à :
a) injecter un jet de gouttelettes contenant un réducteur et/ou son précurseur étant capable de réduire du NOx dans un conduit de gaz à travers une buse de pulvérisation (2),
b) passer les gaz d'échappement chargés de gouttelettes à travers un dispositif avec des canaux d'écoulement formés par des empilements de plaque métalliques minces (4, 5, 6) en parallèle, à la suite de quoi les gaz sont forcés à passer à travers les empilements suivant un modèle d'écoulement en zigzag,
c) faire passer les gaz à travers une couche de catalyseur monolithique pour une réduction sélective de NOx par le réducteur et/ou son précurseur avec des canaux parallèles aux parois du conduit (1),
**caractérisé en ce que** le diamètre des gouttelettes est supérieur à 20 µm, le nombre d'empilements constitués de plaques parallèles est de 3 à 10, la vitesse des gaz dans les espaces entres les plaques est de 2 à 30 m/s, la distance entre les plaques est de 3 à 50 mm, la longueur de chacune des plaques est de 1 à 5 fois la distance entre les plaques, et l'angle entre les plaques de deux empilements voisins est de 50° à 140°.

2. Procédé selon la revendication 1, dans lequel substantiellement toutes les gouttelettes viennent frapper les parois des plaques dans les empilements, le diamètre des gouttelettes est supérieur à un diamètre critique auquel les gouttelettes sont forcées à venir frapper lesdites parois, si le sens d'écoulement des gaz est dévié à travers le passage dans les empilements.

3. Procédé selon la revendication 1, dans lequel les plaques sont métalliques, de préférence en un alliage d'acier inoxydable résistant aux acides.

4. Procédé selon la revendication 1, dans lequel les plaques sont en matériau céramique, de préférence en cordiérite.

5. Procédé selon la revendication 1, dans lequel les plaques sont revêtues, au moins sur les surfaces exposées aux gouttelettes projetées, d'une couche de 0,01 à 1 mm d'au moins un parmi les oxydes de Al, Fe, Ti, Zr, Si, Zn ou Mg.

6. Procédé selon la revendication 1, dans lequel le réducteur est un mélange liquide d'urée et d'eau avec 30 à 100 % en poids d'urée.
